# EUROPEAN PATENT APPLICATION

(11) **EP 1 132 842 A2**
(43) Date of publication of application: **12.09.2001**
(21) Application number: 01105361.8
(22) Date of filing: 08.03.2001
(51) Int. Cl.: G06F 17/60

(54) **Accounting system and method in data communication network**

(30) Priority: 09.03.2000 JP 2000064505
(71) Applicant: Kabushikikaisha Equos Research, Tokyo 101-0021 (JP)
(72) Inventor: Kubota, Tomoki, Tokyo-to (JP)
(74) Representative: VOSSIUS & PARTNER

(57) **Abstract**

An accounting system and method are incorporated into a data communication network conducted by a information provider which includes a central computer for data communication with a user computer. Download data, such as route guidance data, is transmitted from the central computer of the information provider to the user computer, whereas the upload data which is available to enrich a database in the central computer is transmitted from the user computer to the central computer. The central computer determines accounts payable by the user in accordance with content and/or volume of the download data. It also determines a reward for the user in accordance with content and/or volume of the upload data. An amount that is a balance obtained by subtracting the reward from the accounts payable is charged to the user. Therefore, the more the upload data sent by the user to the central computer and the more it is utilized, the more the user's expense for the service provided by the information provider is reduced.

## Description

The present invention relates to an accounting system and method for use in a data communication network system in which a user pays an information provider a charge which depends upon the content and/or volume of data received from the information provider.

Recently many business-model patents have issued relating to network systems in which wired or wireless data communication is used. Some examples are disclosed in the United States Patents No. 5,761,648, No. 5,937,391 and No. 5,774,870 for on-line shopping systems. In these patents, in order to motivate users to buy goods on an on-line shopping mall, the shopping mall owner gives them discount points or coupons depending upon the purchase amount. Providing the discount coupon may arouse the customer's interest but these systems do not use information received from users to improve the values of the goods to be sold on the on-line shopping mall.

The network system disclosed in the United States Patent No. 5,948,061 positively utilizes information received from users for effective advertising. In this system, an advertising center receives information from a user and uses the information to estimate the user's interests and tastes, and designs advertisements to the users interests and tastes. However, the information sent from the user is not utilized to improve the value of the information (advertisement) to the user.

Frequent update is very important for some database. In the prior art systems, however, the users have no incentive to be cooperative in collecting available information, because the users are rewarded only for purchasing goods, not for sending information.

A communication navigation system is a typical example of an information providing system in which the information to be provided to users should be continuously updated. Delome et al, U.S. Patent No. 5,948,040 exemplified the prior art in which such a communication navigation system is disclosed. According to the system of Delome et al, any user of a navigation unit mounted on a vehicle may communicate with an information provider having a road/map database. In response to a request from a navigation unit, the information provider retrieves necessary data from the road/map database to determine a recommended drive route to a destination where the user wants to go. The data pertaining to the determined drive route is transmitted back to the navigation unit wherein it is used to show the route to the user for route guidance. The communication navigation system is an advance over the more conventional stand-alone navigation system in which each navigation unit mounted on a vehicle has its own road/map database and determines a drive route to a destination only by reference to its own database.

In contrast, the communication type navigation system, the road/map database is maintained and updated by the information provider, typically a remote stationary station or stations. Therefore, the user may take advantage of the latest road/map information at any time without need for updating the database by him or herself.

In accordance with a communication type navigation system disclosed in Japanese patent publication No. 7-225895, an information provider receives traffic jam information, for example, from another information provider in order to give the user route guidance data with the latest traffic information.

In the prior art communication type navigation system, the user has to pay a charge for the information received. Moreover, if data communication is made through a public phone network, the user also has to pay communication charges to a communication carrier.

Accordingly, it is a principal object of the present invention to provide a novel accounting system and method, in a data communication network system, for prompting users to send information currently available to them to an information provider, so that the information provider may easily collect the currently available information at a low cost. To achieve this object, a user who sends such current information to the information provider is given a reward depending upon the content and/or volume of the forwarded information. Therefore, the user will have a positive incentive to be a informant and the information provider may expect to collect a large amount of available information from a greater number of users. The reward to be given to the informant is preferably offset against the fees charged the user/informant for delivered information in order to be certain of return to the user/informant.

Another object of the present invention is to incorporate a novel accounting system and method into a data communication network for a vehicle navigation system, in which a information provider maintains a road/map database and delivers road/map data which a user wants, to the user via a communication link in response to a request from a user. The road/map database maintained by the information provider is updated by traffic-related information transmitted from users. All users are prompted to send available information to the information provider, so that the information provider may easily collect the available information at low cost. The user who sends available information is given a reward depending upon the content and volume of the forwarded information, which reward is preferably received in the form of an offset against the charges to the user delivering road/map data to the user.

Thus, according to the present invention, the information provider collects available information from users to update or supplement a database held and maintained by the information provider. The user who provides some information to the information provider is given a reward. By this, potential users are motivated to join the data communication network and further motivated to contribute to update and enrich the information database maintained by the information provider. More specifically, in one preferred embodiment, the accounting system and method of the present invention is incorporated into a communication network system for guiding a driver of a vehicle from a current position to a destination. In this application, with receipt of information regarding road conditions around various user vehicles, the road/map database is readily updated to reflect the latest road conditions, which may then be considered in determining an optimum route from the current position of a given user to the destination.

More specifically, in accordance with a first aspect of the present invention, there is provided an accounting system in a data communication network which includes: a central computer for data communication with a user computer; receiving means for receiving upload data transmitted from the user computer to the central computer; download data generating means for generating download data by making reference to the received upload data; transmitting means for transmitting the download data from the central computer to the user computer; account calculating means for calculating accounts payable by the user ( of the user computer ) depending upon the content and/or volume of the download data transmitted from the central computer to the user computer; reward calculating means for calculating a reward for the user depending upon content and/or volume of the upload data transmitted from the user computer; and billing means for billing the user an amount obtained by subtracting the reward from the accounts payable. The upload data may be transmitted from the user computer by manual operation of the user.

In another embodiment, the user computer has available information collecting means for collecting available information which is to be made available for other users, and the upload data is automatically transmitted from the user computer in response to an output from the available information collecting means.

Preferably, the reward calculating means calculates the reward in reference to a track record ( history ) of use of upload data, transmitted from the user computer, in operation of the central computer. The track record of using the upload data may be calculated based on the number of times that the upload data is referenced by the download data generating means.

In accordance with another aspect of the present invention, there is provided an accounting system in a data communication network for a vehicle navigation system which include: a central computer having a road/map database, for data communication to a user computer; route guidance data generating means for generating data for route guidance from a current position of the user of the user computer to a destination thereof, with retrieval of appropriate road/map data from the road/map database; transmitting means for transmitting the route guidance data from the central computer to the user computer; account calculating means for calculating accounts payable by the user depending upon content and/or volume of the route guidance data transmitted from the central computer to the user computer; receiving means for receiving traffic information from the user computer wherein the received traffic information is referenced for generating the route guidance data in the route guidance data generating means; reward calculating means for calculating a reward for the user depending upon content and/or volume of the traffic information transmitted from the user computer; and billing means for billing the user an amount obtained by subtracting the reward from the accounts payable.

The terminology "traffic information", as used herein, consists at least one of: information indicating time and area of a traffic jam; information indicating a traffic jam has abated; information indicating time and area of a traffic accident; information indicating vehicles involved in a traffic accident have been removed; and information regarding roads supposed not to be contained in the road/map database of the central computer, it means that the roads may be built after the road/map database was originally edited.

By designing the system so that the information provider receives information such as that concerning newly built roads or traffic jams, etc. from users, the information provider may keep the database current, and give a user the latest available information.

In accordance with still another aspect of the present invention, there is provided an accounting method for use in a data communication network wherein an information provider communicates with a user computer, comprising the steps of: receiving, by the information provider, upload data transmitted from the user computer to the information provider; generating download data at the information provider by making reference to the received upload data; transmitting the download data from the information provider to the user computer; calculating accounts payable by the user depending upon content and/or volume of the download data; calculating a reward for the user depending upon content and/or volume of the upload data; and billing the user for an amount obtained by subtracting the reward from the accounts payable. The upload data ( or "traffic information" ) may be transmitted from the user computer by manual operation by the user.

In accordance with yet another aspect of the present invention, there is provided an accounting method in a data communication network for a vehicle navigation system, wherein an information provider, having a road/map database, communicates with a user computer, comprising: generating route guidance data, from a current position of the user to a destination, with retrieval of appropriate road/map data from the road/map database; transmitting the route guidance data from the information provider to the user computer; calculating accounts payable by the user depending upon content and/or volume of the route guidance data transmitted from the information provider to the user computer; receiving traffic information from the user computer wherein the received traffic information is referenced for generating the route guidance data; calculating a reward for the user depending upon content and/or volume of the traffic information transmitted from the user computer; and billing the user an amount obtained by subtracting the reward from the accounts payable.

Other objects and advantages of the present invention can be understood from the following description when read in conjunction with the accompanying drawings in which:
Fig. 1 is a block diagram of an overall arrangement of a data communication network for a vehicle navigation system embodying the present invention;
Fig. 2 is an explanatory view showing data communication between navigation units each mounted on a vehicle and a central computer in the data communication network of Fig. 1;
Fig. 3 is a flowchart of an upload data receiving routine executed as a first stage of an accounting management by the central computer; and
Fig. 4 is a flowchart of a payment adjustment routine executed as a second stage of accounting management by the central computer.

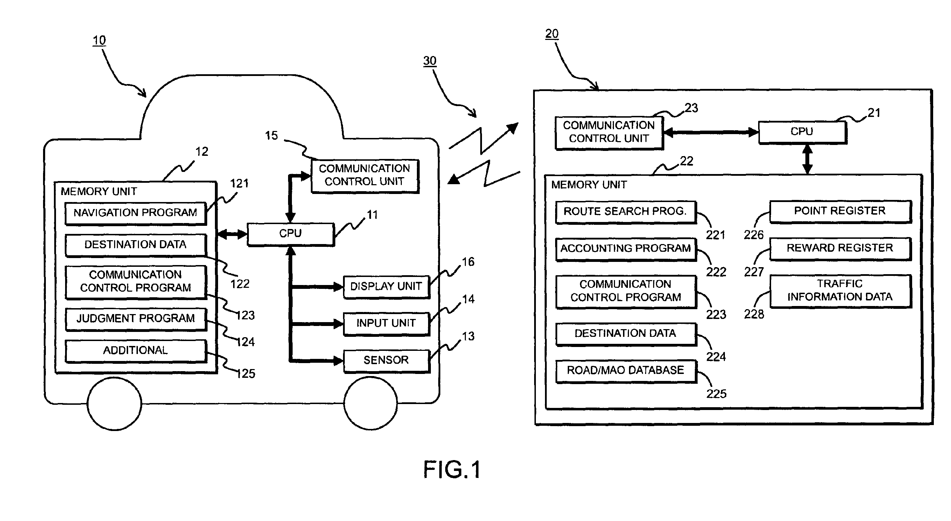

Fig. 1 diagrammatically shows the overall arrangement of a communication navigation system embodying the present invention. The system comprises an information center (or central computer) 20 and at least one navigation unit (or user computer) 10 mounted on a vehicle which communicates with information center 20 via a communication link 30 such as a cellular phone (including a portable hand phone system, car phone, etc.) carried by a user of navigation unit 10.

Navigation unit 10 has a central processing unit (CPU) 11 that executes various data processing and control operations. CPU 11 is connected to a ROM, a RAM and a timer (not shown) via bus lines. The ROM is a read-only-memory storing various data and programs to be used by CPU 11 for data processing and control operations. RAM is a random-access-memory used by CPU 11 as a working memory.

A memory unit 12 stores data and programs which are required for data processing and control operations by CPU 11. A navigation program 121 is a program for use in execution of a navigating function, including route searching to determine a recommended route from a current position to a destination, or requesting road/map data from center 20 and receiving the road/map data therefrom, if navigation unit 10 has no appropriate road/map data therein, and guidance operations. Destination data 122 comprises coordinates of various institutions and points which may be designated by a user as a destination in combination with their names, telephone numbers, addresses, zip codes and other data related to such potential destination. A communication control program 123 is a program for controlling operation of communication control unit 15. A traffic jam/accident judgment program 124 is a program for judging occurrence of a traffic jam or a traffic accident or its abatement. Such occurrences may be judged, for example, in response to the driver's decelerating operation and/or the average vehicle speed, and/or other outputs from various sensors. Memory unit 12 comprises a storage medium such as a floppy disk, hard disk, CD-ROM, optical disk, magnetic tape, IC card, optical card, DVD-ROM, etc. In another embodiment, different types of the data and programs may be, respectively, stored in plural storage media. Memory unit 12 may also have additional memory area 125 for storing personal data for a user and/or received data transmitted from information center 20. In a case where other data 125 stored in memory unit 12 includes personal data for each user, this is preferably stored in a portable ( exchangeable ) storage medium such as an IC card or floppy disk.

A sensor 13 detects absolute position of the vehicle. Sensor 13 may comprise one or more of a GPS receiver that receives radio waves from earth satellites to determined the vehicle position, a direction sensor (gyro-magnetic sensor, wheel sensor, etc.), a steering sensor, a distance sensor and a beacon receiver for acquiring position data from beacons arranged along roads. Although the GPS receiver or the beacon receiver may be used solely as a position sensor, one or more of the direction sensor, steering sensor and distance sensor should preferably used in combination with the GPS and/or beacon receiver so that the vehicle position may be determined where the GPS receiver can not receive radio signals from earth satellites, for example, when the vehicle is in a tunnel. For more accurate detection, it is preferable to use a D-GPS (differential GPS) that receives a correction signal from a base station to correct any vehicle position error of the GPS system. These receivers and sensors are all known in the art and, therefore, more detailed description thereof is unnecessary here. Sensor 13 may also include one or more sensors for detecting condition of various vehicle components ( engine, transmission, door, blinker ( turn signal ), wiper, air-conditioner, etc.) and/or sensors for detecting condition inside and outside of the vehicle (in-room temperature, outside temperature, weather conditions, road conditions, etc.).

An input unit 14 is operated by the user to input a destination. Input unit 14 may comprise a touch panel, keyboard, mouse, electronic pen or pointing device, joy-stick, infra-red remote-controller, speech-recognizor, etc.

Communication control unit 15, which may be a modem, is controlled by CPU 11 in accordance with the communication control program 124 to transmit and receive data to and from center 20 via communication link 30.

A display 16 provides visual information to the user regarding the results of operation by CPU 11, which may be a liquid crystal display or a CRT display. When display 16 has a touch panel on a monitor panel, it also functions as input unit 14.

When CPU 11 executes the navigation program 121, the route and guidance information are shown on display 16. Display 16 also shows a map of the vicinity of the current position, and a selection menu for selecting specific operation the user wants to execute, for example, designation of a destination.

On the other hand, center 20 is provided with a central processing unit (CPU) 21 to which a ROM, a RAM and a timer are connected via bus lines so that CPU 21 can execute various data processing and control operations. In this embodiment, CPU 21 also executes an accounting operation which will be described later in detail.

A memory unit 22 connected to CPU 21 comprises one or more storage media such as floppy disk, hard disk, CD-ROM, optical disk, magnetic tape, IC card, optical card, DVD-ROM, etc. for storing a route search program 221 for determining a recommended route from the current position to the destination in response to a request from navigation unit 10, an accounting program 222 for executing the accounting operation, a communication control program 223 for controlling functions of a communication control unit 23, destination data 224 comprising coordinates of various institutions and points which may be designated as a destination, in combination with their names, telephone numbers, addresses, zip codes and other data related to the potential destinations, road/map database 225 including road data and crossing data used in the route searching operation, and other data and programs to be used by CPU 21 to execute the data processing and control operations.

Traffic information data 228 stores the latest traffic information received regarding traffic jams, traffic restrictions and road construction, for example. The information is input by other information service providers or subscribers to this networked route guidance system. The subscribers may voluntarily send the traffic information for situations which they encounter, because they are rewarded for sending such information.

Memory unit 22 also has a point register 226 and a reward register 227 corresponding to each navigation unit 10 communicating with center 20. The registers 226, 227 may be associated with a specific navigation unit by an ID of the individual navigation unit. These registers are each used for calculating the amount of an accounts payable and a reward for each user, as described hereinlater in more detail.

A communication control unit 23, which may be a modem, is controlled by CPU 21 in accordance with the communication control program 223 for data transmission to and from navigation unit 10 via communication link 30.

In the illustrated navigation system, a destination where the user wants to go may be designated in the known manner. The user refers to a menu selection screen appearing on display 16 to select a destination selection menu, and then designates his desired destination by inputting its name, address, telephone or any other data indicative of the destination through input unit 14.

The route guidance procedure is as follows. After a destination is input by the user, CPU 11 retrieves the coordinate position data corresponding to the input destination from the destination data 122. Then CPU 11 transmits coordinate data for the destination, current position data for the current position of the user and a request signal for searching and sending recommended route data to center 20. In response to the request, center 20 searches to determine a recommended route from the current position to the destination of the user using road/map database 255, and transmits the recommended route date to the navigation unit 10. After receiving the recommended route data, navigation unit provides route guidance by showing the recommended route to the user on display 16.

If CPU 11 cannot identify the location of the destination using destination data 122 in navigation unit 10, CPU 11 may also transmit the data input regarding the destination to center 20, and CPU 21 in center 20 may execute identification of the destination using destination data 224, instead of CPU 11 in navigation unit 10.

In searching the recommended route in center 20, CPU 21 refers to the latest traffic information stored in traffic information data 228 in order to determine a recommended route which avoids ongoing traffic jams, road construction areas, traffic restriction areas and so forth.

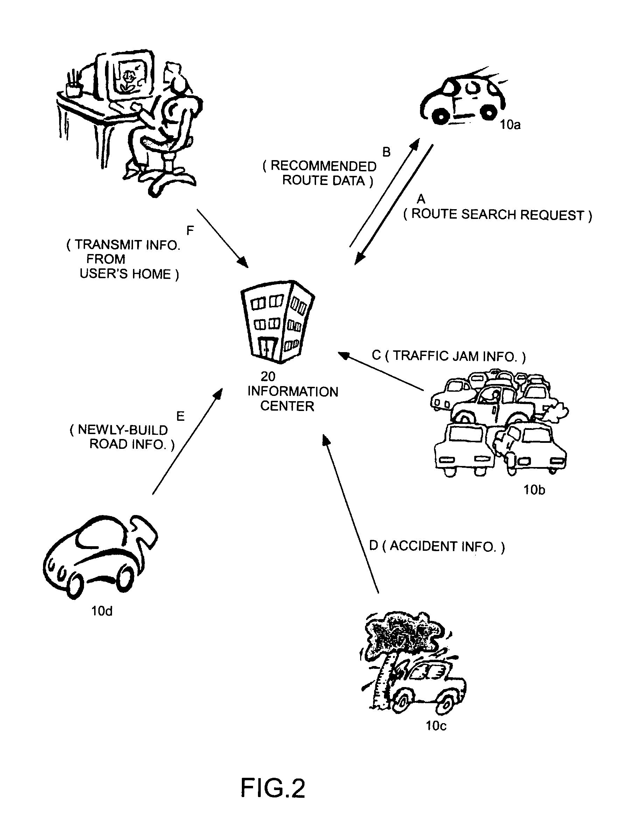

Fig. 2 is illustrates data communication between navigation units 10a-10e each mounted on a different vehicle and center 20 in the communication navigation system of Fig. 1. An arrow A indicates a route search request transmitted from navigation unit 10a to center 20 when the user wants to obtain a recommended route along which the vehicle may be guided from the current position to the destination. In response to receipt of the route search request from navigation unit 10a, center 20 refers to road/map database 225 and traffic information stored in traffic information data 228 to search for a recommended route from the current position to the destination in accordance with the route search program 221. Center 20 transmits the recommended route data and other data necessary for guidance to navigation unit 10a in reply to the route search request, as shown by an arrow B. The arrow B represents data transmitted from center 20 to navigation unit 10a which corresponds to what is referred to herein as "download data". Transmission of data A and B shown in Fig. 2 is known in the conventional communication navigation system and, therefore, a more detailed description thereof will be omitted here.

When the vehicle of the user who is a subscriber of the system encounters a traffic jam during his/her drive, the navigation unit 10b mounted on the vehicle may transmit traffic jam information to center 20, as shown by an arrow C in Fig. 2. The traffic jam information includes a specific point or section on a specific road at which a traffic jam is encountered. When the vehicle is involved in or causes a traffic accident, the user may wish to inform that fact to center 20. In this case, information of a traffic accident is transmitted from navigation unit 10c to center 20, as shown by an arrow D in Fig. 2. The traffic accident information includes a specific point on a specific road at which there is a traffic accident. The traffic jam information C and the traffic accident information D are referred to herein as "upload data".

Once center 20 receives the traffic jam/accident information via communication link 30 and communication control unit 23, such real-time information is incorporated into and stored in traffic information data storage memory 228 as traffic information without delay. Accordingly, CPU 21 in center 20 may take the information into consideration in route searching to be executed in response to a route search request A from any other user.

The traffic jam/accident information or other upload data may be communicated to center 20 by manual operation of the user who learns the corresponding fact and wishes to inform center 20 of same. To facilitate the user's voluntary notification, it is preferable that navigation unit 10 has a switch for communicating news of a traffic jam and/or traffic accident to center 20. When the user pushes the switch, the traffic jam/accident information, or upload data, is transmitted to center 20, together with position data indicative of the vehicle position at that time.

In another embodiment, communication of the upload data may be automatically made to center 20 without any manual operation by the user. In this embodiment, navigation unit 10 has an information collection device variously referred to herein as "available information collecting means" or "traffic information collecting means". The information collection device may be a function of CPU 11 in cooperation with sensor means 13. For example, CPU 11 judges that there may be a traffic jam on the road section currently driven when the vehicle runs very slowly, or when the driver's decelerating operation (releasing an accelerator pedal, pressing a brake pedal, shift-changing to a lower transmission stage or a neutral position, engaging a hand brake, etc.) becomes frequent more than a predetermined threshold average interval.

Preferably, when the traffic jam has eased or when the traffic accident has been removed, center 20 may acquire such information without delay. Such information may also be transmitted from navigation unit 10 to center 20 by manual operation of the user who learns the fact. For example, the user may operate a switch when he encounters a traffic jam/accident and may again operate the same switch when he/her believes that the traffic jam/accident no longer exists. The first operation of the switch is to inform the center 20 of an occurrence of the traffic jam/accident, whereas the second operation of the same switch is to inform the center 20 that same no longer poses a problem. In a modified embodiment, the operation of the above-described switch informs the center 20 of occurrence of the traffic jam/accident and operation of a different switch informs the center 20 of abatement/removal.

When navigation unit 10 is provided with means for judging occurrence of a traffic jam based on the driver's decelerating operation or the average vehicle speed, CPU 11 may judge that the traffic jam has disappeared when the frequency of the driver's decelerating operation decreases to below the threshold interval or when the average vehicle speed gains beyond the threshold level. This is another example of what is referred to herein as "traffic information collecting means". The result of such a judgment is automatically transmitted to center 20.

"Upload data" also includes information as to abatement of a traffic jam/accident.

Referring again to Fig. 2, an arrow E indicates information of a newly-built road which is transmitted manually or automatically from navigation unit 10d to center 20 when the road currently traveled is not included in the road data in road/map database 225 stored in memory 22 in center 20. In response to receipt of information of the newly-build road, CPU 21 in center 20 automatically updates road/map database 225 by adding the data for the newly-built road. After updating, the newly-built road may be used as a part of a recommended route which CPU 21 determines by a search in response to a request from any navigation unit.

The new road information may be transmitted by the user's manual operation when he finds that there is no corresponding road data in road/map database 225. More preferably, it is automatically transmitted to center 20 responsive to a judgment by CPU 11. CPU 11 executes so-called map-matching operation so that the current position data obtained by sensor 13 is compared with the existing road data. When the vehicle position can be matched with none of the existing road data over a predetermined drive distance or period, CPU 11 judges that the vehicle is running on a newly-built road which is not included in the road data and automatically sends the vehicle's trajectory generated by the position sensor as the new road information data to center 20. Preferably, if a navigation unit has a data storage unit able to store road/map data for the vicinity of the vehicle, each time when the center confirms the newly-build road and updates road/map database 225, the information is sent back to the navigation unit so that the road data stored therein is likewise updated. The new road information is also included in the "upload data" transmitted from the navigation unit to center 20.

In the foregoing description, the "upload data" is transmitted from navigation unit 10 mounted on the vehicle. In another embodiment, the upload data may be transmitted from a personal computer that the user has in his/her home or office, as shown by an arrow F. The personal computer may be, instead of a desktop computer, a laptop computer, personal digital assistant ( PDA ) etc. For example, when the user encounters a traffic jam over a specific section of a specific road, he inputs the traffic jam/accident information through his personal computer and transmits the same to center 20, after coming home. The information should include the road section over which there is a traffic jam, in combination with its date and time. Such information is not real-time information and, therefore, could not immediately be used by CPU 21 in center 20 in a route searching operation. However, such information may be useful in predicting the day of the week and/or time in which a specific road section tends to be crowded and, therefore, may be used in future route searching operations.

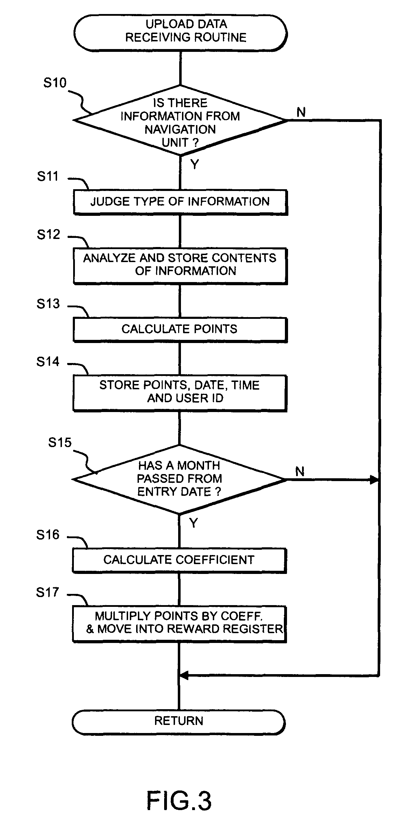

In response to receipt of the traffic jam information C, the traffic accident information D, the new road information E or other "upload data" which is transmitted from navigation unit 10 via communication link 30, CPU 21 in center 20 executes the accounting operation in accordance with the accounting program 222 stored in memory 22. The accounting operation starts with the information receiving routine shown in Fig. 3.

After confirming that some information has been received from navigation unit 10 (at S10: Y), CPU 21 judges the type of the received information (at S11). More particularly, the received information is judged as one of the categories of traffic jam information, traffic accident information, new road information or other information.

Then, the contents of the received information are analyzed and stored in traffic information data 228 (at S12). For example, when the received information is traffic jam/accident information, CPU 21 confirms the road section or point where a traffic jam/accident is reported to occur by referring to weather conditions and date and time in previously stored traffic information. Then the new information is merged with previously stored traffic information. The new road information will typically include a first junction ( starting point of the new road ) where the new road diverges from a road already represented by road data in the road/map database 225, a second junction ( terminating point where the new road joins the same or another road already represented by data in road/map database 225 ), and data for a plurality of points located along the new road between the first and second junctions. As described before, the content of the information may be transmitted from the system's subscriber by manual operation. Alternatively, vehicle's trajectory data or other necessary data detected by sensor 13 may be transmitted from navigation unit 10 as at least a part of the content, which is analyzed by CPU 21 in center 20 at S12.

Based on the type of the information judged at S11 and the content thereof analyzed at S12, CPU 21 calculates points in accordance with a predetermined formula (at S13). The points determined at S13 indicate the availability of the information, that is, how much the information contributes to other subscribers' benefit. Usually, real-time information such as information items C, D and E are given more points than, for example, the information F transmitted by the user after coming home.

The availability points calculated at S13 are temporarily stored in the point register 226 assigned to the informant navigation unit 10 combined with date, time and ID of the user who sent the information (at S14).

Next, at S15, it is judged whether or not one month has passed since the date of entry of the points in the point register 226 at S14. In this embodiment, availability of the transmitted information is calculated from the results of actual utilization thereof in the communication navigation system over a month period. After expiration of the one-month period (S15: Y), CPU 21 determines a coefficient depending upon the actual use of the information during the one month period following date of entry (at S16). The availability points stored in the point register 226 at S14 are multiplied by the coefficient in order to obtain value of a reward, and then the reward is stored in the reward register 227 (at S17). When the availability points stored in the point register 226 at S14 are dated within one month (S15: N), CPU 21 awaits receipt of further information at S10.

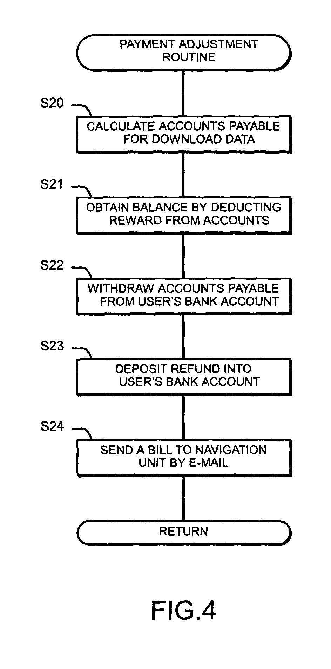

The reward stored in the reward register 227 at S17 is the reward or incentive that is given to the user for his voluntary transmission of useful information to information center 20. The reward to be given to each user (each user ID ) is totaled at the end of each accounting period (one month, in this embodiment). The totaled reward is converted into an amount of money, which is deducted from the charges ( accounts payable ) to the user for receipt of information or the download data from the information center. Thus, the amount to be actually paid by the user is decreased by the amount of the reward by execution of the payment adjustment routine shown in Fig. 4.

At S20, CPU 21 calculates accounts payable by the user for receiving download data from information center 20 during a predetermined accounting period. The accounts payable comprises mainly data service fees. A typical example of such download data is the route guidance information pertaining to the recommended route with its related data necessary for guidance, as represented by the arrow B in Fig. 2, which information center 20 generates by a search in response to the request A from the user's navigation unit 10a. Accordingly, each time the user receives the route guidance information from information center 20, a corresponding data service fee is charged to the user. In addition, when the user receives any other data regarding, for example, restaurants, accommodations, amusement facilities, etc. around the current position or destination or along the route to the destination, a data service fee is also charged to the user. These data service fees are totaled at the end of the accounting period to calculate the total accounts payable, at S20. The accounts payable may also include a charge for use of the communication link between navigation unit 10 and center 20, when communication is made via telephone lines.

Next, at S21, the reward stored in the reward register 227 at S17 of the flowchart of Fig. 3 is deducted from the accounts payable obtained at S20 to obtain a balance. If the balance is positive, it is charged to the user and withdrawn from his bank account every month, for example (at S22). If the balance is negative, it means that the information provider pays back a refund to the user, although a rare case, and the balance ( refund ) may be transferred to the user's bank account (at S23). The more the upload data transmitted by the user contributes to generation of download data by the information provider, therefore to the other users, the greater the reward the user may get, thereby decreasing the actual charge (the balance) payable by the user, or even allowing the user to get a refund. Billings for the information service may be sent by electric mail ( at S24 ) or by postal carrier.

Although the present invention has been described in conjunction with the foregoing specific embodiments, it is to be understood that it is capable of considerable variation and modification without departure from the spirit and scope of the appended claims.

For example, in the embodiment described above, the route search request (A in Fig. 2) and the route guidance data (B in Fig. 2) are transmitted in batch processing, respectively. In a modified embodiment, data may be divided into plural segments which are transmitted in series. This manner of transmission is advantageous because, even if data transmission is interrupted for some reason, the user may use already received data segments. Therefore, it is sufficient to re-transmit only the remaining data segments so that the charge for data transmission or telephone calls payable by the user may be reduced.

The user computer comprises the navigation unit mounted on the vehicle in the embodiment described above, but a laptop computer, personal digital assistant (PDA), cellular phone, or other such apparatus may be used as the user computer in the present invention.

The present invention is applicable not only to a communication navigation system as in the embodiment described, but also to any data communication network system in which data transmission is made between users and an information provider.

The teachings of Japanese Application 2000-64,505 are incorporated by reference herein in their entirety, inclusive of the specification, claims and drawings.

## Claims

1. An accounting system in a data communication network, comprising:
a central computer for data communication with a user computer of a user;
receiving means for receiving upload data transmitted from the user computer to the central computer;
download data generating means for generating download data with reference to the received upload data;
transmitting means for transmitting the download data from the central computer to the user computer;
account calculating means for calculating accounts payable by the user depending upon content and/or volume of the download data transmitting from the central computer to the user computer;
reward calculating means for calculating a reward for the user depending upon the content and/or volume of the upload data transmitted from the user computer; and
billing means for billing the user an amount obtained by subtracting the reward from the accounts payable.

2. An accounting system in accordance with claim 1, wherein the upload data is transmitted from the user computer by manual operation by the user.

3. A system in accordance with claim 1 or 2, wherein the user computer includes available information collecting means for collecting available information of potential use to other users, the upload data being automatically transmitted from the user computer in response to an output from the available information collecting means.

4. A system in accordance with claim 1,2 or 3, wherein the reward calculating means calculates the reward with reference to a history of use of the upload data, transmitted from the user computer, in operation of the central computer.

5. An accounting system in accordance with claim 4, wherein the history of use of the upload data is calculated based on the number of times the upload data is referenced by the download data generating means.

6. An accounting system in a data communication network for a vehicle navigation system, comprising:
a central computer, having a road/map database, for data communication with a user computer of a user;
route guidance data generating means for generating data for route guidance, from a current position of the user to a destination by retrieval road/map data from the road/map database;
transmitting means for transmitting the route guidance data from the central computer to the user computer;
account calculating means for calculating accounts payable by the user in accordance with content and/or volume of the route guidance data transmitted from the central computer to the user computer;
receiving means, at the central computer, for receiving traffic information from the user computer, wherein the received traffic information is referenced in generating the route guidance data by the route guidance data generating means;
reward calculating means for calculating a reward for the user depending upon content and/or volume of the traffic information transmitted from the user computer; and
billing means for billing the user an amount obtained by subtracting the reward from the accounts payable.

7. An accounting system in accordance with claim 6, wherein the traffic information consists at least one of:
information indicating time and area of a traffic jam;
information indicating a traffic jam has abated;
information indicating time and area of a traffic accident;
information indicating a traffic accident has been removed; and
information regarding roads not contained in the road/map database in the center computer.

8. A system in accordance with claim 6 or 7, wherein the traffic information is transmitted from the user computer by manual operation of the user.

9. A system in accordance with claim 6, 7 or 8, wherein the user computer has traffic information collecting means for collecting traffic information, the traffic information being automatically transmitted from the user computer in response to an output from the traffic information collecting means.

10. A system in accordance with claim 6, 7, 8 or 9, wherein the reward calculating means calculates the reward with reference to a history of using the traffic information, transmitted from the user computer, in operation of the central computer.

11. An accounting system in accordance with claim 10, wherein the history of using the traffic information is calculated based on the number of times the traffic information is referenced by the route guidance data generating means for generating the route guidance data.

12. An accounting method for use in a data communication network wherein an information provider communicates with a user computer, comprising the steps of:
receiving upload data transmitted from the user computer to the information provider;
generating download data by making reference to the received upload data;
transmitting the download data from the information provider to the user computer;
calculating accounts payable by the user in accordance with content and/or volume of the download data;
calculating a reward for the user in accordance with the content and/or volume of the upload data; and
billing the user an amount obtained by subtracting the reward from the accounts payable.

13. An accounting method in accordance with claim 12, wherein the upload data is transmitted from the user computer by manual operation of the user.

14. A method in accordance with claim 12 or 13, further comprising collecting available information, by available information collecting means of the user computer, which is usable by other users, and automatically transmitting the upload data from the user computer in response to an output from the available information collecting means.

15. A method in accordance with claim 12, 13 or 14, wherein the reward is calculated with reference to a history of use of the upload data by the information provider.

16. An accounting method in accordance with claim 15, wherein the history of use of the upload data is calculated based on the number of times the upload data is referenced in generating the download data.

17. An accounting method for use in a data communication network for a vehicle navigation system, wherein an information provider, having a road/map database, communicates with a user computer, comprising:
generating route guidance data for guidance, from a current position of the user to a destination, with retrieval of road/map data from the road/map database;
transmitting the route guidance data from the information provider to the user computer;
calculating accounts payable by the user in accordance with content and/or volume of the route guidance data transmitted from the information provider to the user computer;
receiving traffic information from the user computer wherein the received traffic information is referenced in generating the route guidance data;
calculating a reward for the user in accordance with content and/or volume of the traffic information transmitted from the user computer; and
billing the user an amount obtained by subtracting the reward from the accounts payable.

18. An accounting method in accordance with claim 17, wherein the traffic information consists at least one of:
information indicating time and area of a traffic jam;
information indicating a traffic jam has abated;
information indicating time and area of a traffic accident;
information indicating a traffic accident has been removed; and
information regarding roads not contained in the road/map database of the information provider.

19. A method in accordance with claim 17 or 18, wherein the traffic information is transmitted from the user computer manual operation of the user.

20. A method in accordance with claim 17, 18 or 19, further comprising, by traffic information collecting means of the user computer, collecting traffic information, and automatically transmitting the traffic information from the user computer in response to an output from the traffic information collecting means.

21. A method in accordance with claim 17, 18, 19 or 20, wherein the reward is calculated with reference to a history of use by the information provider of the traffic information transmitted from the user computer.

22. An accounting method in accordance with claim 21, wherein the history of use of the traffic information is calculated based on the number of times the traffic information is referenced in generating the route guidance data.
